# EUROPEAN PATENT SPECIFICATION

(11) **EP 2 853 102 B1**
(45) Date of publication and mention of the grant of the patent: **09.02.2022**
(21) Application number: 13793285.1
(22) Date of filing: 07.05.2013
(51) Int. Cl.: H04W 4/08, H04W 4/021, H04W 4/12, H04W 4/21, H04L 12/18, H04L 12/58

(54) **LOCATION-BASED GROUP GENERATION METHOD, APPARATUS AND SYSTEM**
ORTSBASIERTES GRUPPENERZEUGUNGSVERFAHREN, VORRICHTUNG UND SYSTEM
PROCÉDÉ, APPAREIL ET SYSTÈME DE GÉNÉRATION DE GROUPES BASÉE SUR LA LOCALISATION

(30) Priority: 21.05.2012 CN 201210157709
(43) Date of publication of application: 01.04.2015
(73) Proprietor: Tencent Technology (Shenzhen) Company Limited, Shenzhen, Guangdong 518044 (CN)
(72) Inventor: GUO, Bo, Shenzhen Guangdong 518044 (CN)
(74) Representative: AWA Sweden AB
(86) International application number: PCT/CN2013/075282
(87) International publication number: WO 2013/174212

(56) References cited:
- CN-A- 101 035 370
- CN-A- 101 873 523
- KR-B1- 101 098 214
- US-A1- 2009 264 106
- US-A1- 2012 008 526
- US-B1- 6 204 844

## Description

### FIELD OF THE TECHNOLOGY

The present invention relates to the field of mobile communication and, in particular, to a location-based group generation method, apparatus and system.

### BACKGROUND OF THE INVENTION

With development of the Internet technology, more and more applications can be implemented on a mobile terminal, which improves the user experience in using the mobile terminal. Such numerous applications include a positioning application, which is used to determine a location of a mobile terminal. The positioning application may adopt a Global Positioning System (GPS, Global Positioning System) to locate the mobile terminal. Specifically, a GPS module is set in a mobile terminal to determine the current location of the mobile terminal based on a mobile network. After the location of the mobile terminal has been determined, building information in the area where the mobile terminal resides may be obtained. The building information in each area may be pre-stored in a server of the mobile network, or the building information in a certain area is pre-downloaded to the mobile terminal. After determining the location of the mobile terminal by using the GPS module, the mobile terminal can obtain building information in the area around the location from the server, or obtain the building information in the corresponding area locally. Herein, buildings include restaurants, cinemas, and so on.

With the development of the positioning application in the Internet technologies, not only the building information in the area around the location point of a first mobile terminal can be obtained, but also other mobile terminals in the area around the location point of the first mobile terminal can be located. The detailed solution is as follows:
first, an identifier of a mobile terminal to be located is registered on a server of the mobile network, where the identifier may be an email box address, a username or a mobile network number of the mobile terminal; then, the mobile terminal to be located creates a link to the server of the mobile network, that is, the user who uses the mobile terminal to be located logs in to a network-side server of the mobile network; and then, the mobile terminal to be located uses a GPS module to determine its own location periodically, and reports the determined location and corresponding mobile terminal identifier to the server of the mobile network for storing; and finally, after one of the mobile terminals to be located determines its own location by using the GPS module, when this mobile terminal sends a request for acquiring information of other mobile terminals in the area around the location point of this mobile terminal to the server of the mobile network, according to the stored location information of other mobile terminals to be located, the server of the mobile network determines other mobile terminals to be located in the area around the location point of the mobile terminal that sends the request, and sends identifiers of the determined other mobile terminals to the mobile terminal that sends the request.

In this way, the mobile terminal that sends the request knows other mobile terminals to be located in the area around the location point of this mobile terminal, and, through the server of the mobile network, exchanges messages with other mobile terminals to be located in the area, for example, performs WeChat transmission, and so on.

However, although the foregoing solution can locate other mobile terminals in the area around the location point of the first mobile terminal, the messages are exchanged between the first mobile terminal and other mobile terminals in the area around the location point of the first mobile terminal in a point-to-point mode. When notifying information, the first mobile terminal notifies each of the other terminals in the area around the location point of the first mobile terminal in the point-to-point mode, respectively, which is rather complicated and leads to unfavorable experience of the user who uses the first mobile terminal.

Patent document US 2009/264106 describes a method for creating a group of contacts for a roaming user. Location information is generated by the roaming user, and matching pal information from an address book of the user is determined and grouped.

### SUMMARY OF THE INVENTION

Therefore, embodiments of the present invention provide a location-based group generation method to create a group that includes a first mobile terminal and other mobile terminals in a location area of the first mobile terminal.

Embodiments of the present invention further provide a location-based group generation apparatus to create a group that includes a first mobile terminal and other mobile terminals in a location area of the first mobile terminal.

Embodiments of the present invention further provide a location-based group generation system to create a group that includes a first mobile terminal and other mobile terminals in a location area of the first mobile terminal.

The present invention is defined by the appended independent claims.

As revealed in the above technical solution, when a server in a mobile network in the present invention receives a group generation request that indicates a location area from a first mobile terminal, the server creates a group that includes the first mobile terminal and other mobile terminals in the location area. In this way, the present invention can create a group that includes the first mobile terminal and other mobile terminals in the location area of the first mobile terminal, and forward information in the group. Therefore, when a user who uses the first mobile terminal sends information, the user is free from the trouble of sending the information to the terminals one by one, and thus the use is simple and convenient, and the user experience is favorable.

### BRIEF DESCRIPTION OF THE DRAWINGS

FIG. 1 is a flowchart of a location-based group generation method according to an embodiment of the present invention;
FIG. 2 is a schematic structural diagram of a location-based group generation system according to an embodiment of the present invention;
FIG. 3 is a schematic structural diagram of a location-based group generation apparatus according to an embodiment of the present invention.

### DETAILED DESCRIPTION OF THE EMBODIMENTS

To make advantages of the technical solutions of the present invention more comprehensible, the following describes the present invention in detail with reference to accompanying drawings and embodiments of the present invention.

As revealed in the background description, when a user who uses a first mobile terminal sends a message, the user has to send the message to other mobile terminals in the location area of the first mobile terminal one by one, which is rather complicated and leads to unfavorable user experience. Therefore, the method, the system, and the apparatus provided in the present invention create a group on a server when the server of the mobile network receives a group generation request that indicates a location area from the first mobile terminal, where the group includes the first mobile terminal and other mobile terminals in the location area.

Further, when a group message that carries a group identifier and group information is received from a mobile terminal in the group, the server determines other mobile terminal identifiers in the group corresponding to the group identifier and sends the group information carried in the group message to other mobile terminals in the group.

In this way, the present invention can create a group that includes the first mobile terminal and other mobile terminals in the location area of the first mobile terminal, and forward information in the group.

In embodiments of the present invention, the "first mobile terminal" is so termed in order to discriminate it from other mobile terminals, but not to impose a special restriction on it. Any mobile terminal may send a group generation request, that is, any terminal may serve as the first mobile terminal.

In embodiments of the present invention, the location area includes a location point that is one of a geographic location of the first mobile terminal or a geographic location specified by the first mobile terminal, where the location area is a circular or rectangular area centered on the location point and extended to a set distance.

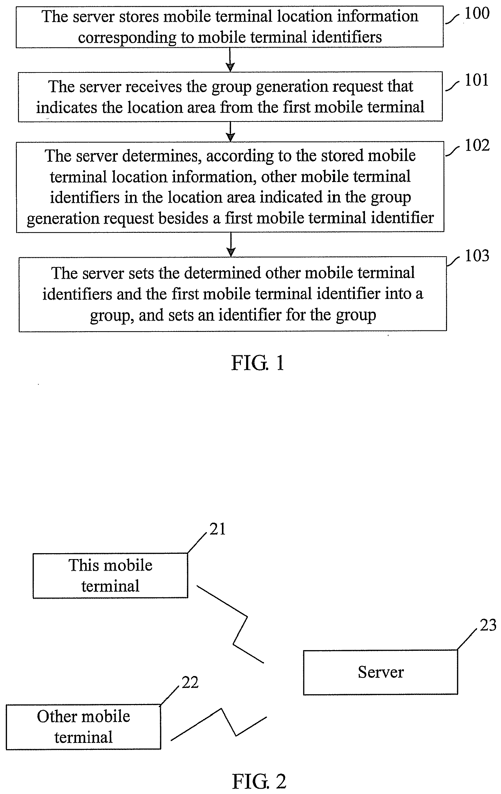

FIG. 1 is a flowchart of a location-based group generation method according to an embodiment of the present invention. The method includes the following steps.

Step 100: A server using a processor stores mobile terminal location information corresponding to mobile terminal identifiers.

This step is performed by the server beforehand.

Step 101: The server receives a group generation request that indicates a location area from a first mobile terminal.

In this step, the first mobile terminal and other mobile terminals are all mobile terminals registered on the server. That is, as instructed by the server, after connecting to the server, the first mobile terminal and other mobile terminals report their own mobile terminal location information detected by themselves to the server periodically or at irregular intervals, and the server stores the mobile terminal location information corresponding to the mobile terminals.

Step 102: According to the stored mobile terminal location information, the server determines other mobile terminal identifiers in the location area indicated in the group generation request besides a first mobile terminal identifier.

Because the first mobile terminal and other mobile terminals report their own mobile terminal location information to the server, the server knows the first mobile terminal and other mobile terminals that are located in the location area.

Step 103: The server sets the determined other mobile terminal identifiers and the first mobile terminal identifier into a group.

In this step, the first mobile terminal in the group may be identified as a group master.

By the examples as described above, the group is created.

After the group is created on the server, the server may send the group identifier to mobile terminals in the group.

Further, in FIG. 1, subsequent steps may include the following steps.

Step 104: The server receives a group message that carries the group identifier and group information from the mobile terminal.

Step 105: The server determines the group according to the group identifier, and sends the group information carried in the group message to mobile terminals in the corresponding group except the mobile terminal that sends the group message.

The first mobile terminal may download a map of the area around the location of the first mobile terminal from the server, and display the map on a user interface of the first mobile terminal. When the first mobile terminal sends a group generation request that indicates a location area, the first mobile terminal receives the group generation request that indicates the location area and is input by the user through the user interface. For example, the user may use a touchscreen input mode or a character input mode to specify an area by drawing a rectangle or a circle on the map, so as to search for other mobile terminals in the area, where the search area is a specified area or an area around a location point of the first mobile terminal, and is a circular or rectangular area centered on the location point of the first mobile or a geographic location specified by the first mobile terminal and extended to a set distance. The location point in the area may be a geographic location point of the first mobile terminal of the user (that is, the location point of the first mobile terminal), or a geographic location point specified by the user on the first mobile terminal by using a map or by other means.

In an embodiment of the present invention, after the server creates a group for the first mobile terminal, the first mobile terminal can perform group activities by sending a group message that carries the group identifier and group information. For example, when initiating a group activity, the first mobile terminal sends group information including a place, time, and content of the activity, and so on, so as to invite users of other mobile terminals in the group to join the activity; or when initiating a group session, the first mobile terminal sends group information including session content, so as to perform session interaction in the group. Other mobile terminals in the group may also perform a group activity by sending a group message.

In an embodiment of the present invention, the method further includes: the server receives a group message that carries a group identifier and group information from a mobile terminal other than the first mobile terminal that sends the group generation request; and the server determines a group corresponding to the group identifier, and sends the group information carried in the group message to mobile terminals in the group corresponding to the group identifier except the mobile terminal that sends the group message.

Here, any other mobile terminal may also be linked onto the server to obtain the group identifier of the group that includes the mobile terminal from the server, so as to send a group message in the group.

In an embodiment of the present invention, the method further includes: the server deletes a stored group corresponding to a group identifier carried in a group deletion message after receiving the group deletion message that carries the group identifier from the first mobile terminal.

Before the deletion, the server needs to determine whether the received group deletion message is a group deletion message sent by the first mobile terminal; and, if so, performs the deletion, or, if the group deletion message is sent by another mobile terminal in the group, the deletion is not performed.

FIG. 2 is a schematic structural diagram of a location-based group generation system according to an embodiment of the present invention. The system includes mobile terminals and a server 23, where the mobile terminals include a first mobile terminal (this mobile terminal) 21 and other mobile terminals 22, where: the first mobile terminal 21 is configured to send a group generation request that indicates a location area to the server 23. The server 23 is configured to: store mobile terminal location information corresponding to mobile terminal identifiers, receive the group generation request that indicates the location area from the first mobile terminal 21, determine, according to the stored mobile terminal location information, other mobile terminal identifiers in the location area indicated in the group generation request besides a first mobile terminal identifier, and set the determined other mobile terminal identifiers and the first mobile terminal identifier into a group corresponding to a group identifier.

In the system, the server 23 is further configured to send the group identifier to mobile terminals in the group.

In the system, mobile terminals in the group are further configured to send and receive a group message that carries the group identifier and group information.

The server 23 is further configured to receive the group message that carries the group identifier and the group information from the mobile terminal in the group, determine the group corresponding to the group identifier, and send the group information carried in the group message to other mobile terminals 22 in the corresponding group.

In the system, the first mobile terminal 21 is further configured to send a group deletion message that carries a group identifier to the server 23.

The server 23 is further configured to receive the group deletion message that carries the group identifier from the first mobile terminal 21 and delete the group corresponding to the group identifier.

In the system, the mobile terminal location information stored in the server 23 is reported by the first mobile terminal 21 and other mobile terminals 22 as instructed by the server after the first mobile terminal 21 and other mobile terminals 22 perform a self detection respectively.

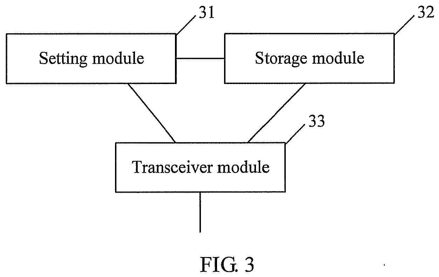

FIG. 3 is a schematic structural diagram of a location-based group generation apparatus according to an embodiment of the present invention. The apparatus is a server, including a setting module 31, a storage module 32, and a transceiver module 33, where: the storage module 32 is configured to store mobile terminal location information corresponding to mobile terminal identifiers; the transceiver module 33 is configured to receive a group generation request that indicates a location area from a first mobile terminal and send the request to the setting module 31; and the setting module 31 is configured to: determine, according to the mobile terminal location information stored in the storage module 32, other mobile terminal identifiers in the location area carried in the group generation request besides a first mobile terminal identifier, and set the determined other mobile terminal identifiers and the identifier of the first mobile terminal into a groupcorresponding to a group identifier.

In the apparatus, the transceiver module 33 is further configured to send the group identifier to mobile terminals in the group.

In the apparatus, the transceiver module 33 is further configured to receive a group message that carries the group identifier and the group information from the mobile terminal in the group, determine a group corresponding to the group identifier in the setting module 31, and send the group information carried in the group message to the mobile terminals in the determined corresponding group corresponding to the group identifier except the mobile terminal that sends the group message.

The apparatus further includes a deleting module (not illustrated in the figure), which is configured to delete a group corresponding to a group identifier after the transceiver module receives a group deletion message that carries the group identifier from the first mobile terminal.

In the apparatus, the mobile terminal location information stored by storage module 32 is reported by the first mobile terminal and other mobile terminals through the transceiver module as instructed by the server after the first mobile terminal and other mobile terminals perform a self detection respectively.

With the method, system and apparatus provided in embodiments of the present invention, the user that uses the first mobile terminal can generate a group specific to a pertinent geographical area based on a location area. The user of the first mobile terminal in the group and the users of other mobile terminals can discuss issues that they are all interested in, or join an activity that they are all interested in, thereby improving the means of group collaboration, increasing flexibility of group collaboration, making it easier and more flexible to generate a group, and enhancing user experience and substantive communication.

The methods disclosed in embodiments of the present invention may be embodied in the form of a computer software product. The computer software product is stored in a storage medium, such as a floppy disk, a hard disk, or an optical disk of the computer, and contains several instructions used to instruct a computer device (for example, a personal computer, a server, or a network device) to perform the method disclosed in each embodiment of the present invention, or a universal hardware device is configured as a device of the present invention to implement the solution disclosed in each embodiment of the present invention. The universal hardware device may be a memory, such as a ROM/RAM, used for storing instructions, or may be a processor, such as a CPU, coupled with the memory and configured to execute the instructions stored in the memory.

The foregoing descriptions are merely preferred embodiments of the present invention, but are not intended to limit the protection scope of the present invention. Any modifications, equivalent substitutions, and improvements made within the principles of the present invention shall fall within the protection scope of the present invention.

## Claims

1. A location-based group generation method, to create a group that includes a first mobile terminal (21) and other mobile terminals (22) in a location area of the first mobile terminal (21) comprising:
storing mobile terminal location information corresponding to mobile terminal identifiers;
receiving (101) a group generation request that carries the location area from the first mobile terminal (21), wherein the location area is one of a circular and a rectangular area centered on a location point and extended to a specific distance, the location point is a location point of the first mobile terminal (21), and the location point of the first mobile terminal (21) is determined by using a Global Positioning System, GPS, module in the first mobile terminal (21);
determining (102), according to the stored mobile terminal location information, the other mobile terminal identifiers in the location area carried in the group generation request besides a first mobile terminal identifier; and
setting (103) the determined other mobile terminal identifiers and the first mobile terminal identifier into the group corresponding to a group identifier,
receiving a group message that carries the group identifier and group information from a mobile terminal (21, 22) in the group;
determining a group corresponding to the group identifier, and
sending the group information carried in the group message to mobile terminals (21, 22) in the group corresponding to the group identifier except the mobile terminal (21, 22) that sends the group message.

2. The method according to claim 1, wherein:
the mobile terminal location information is reported by mobile terminals (21, 22) after a self detection.

3. The method according to claim 1, further comprising:
receiving a group deletion message that carries the group identifier from the first mobile terminal (21), and deleting the group corresponding to the group identifier.

4. The method according to claim 1, further comprising:
sending the group identifier to mobile terminals (21, 22) in the group.

5. A location-based group generation system, comprising mobile terminals (21, 22) and a server (23), wherein the mobile terminals (21, 22) comprise a first mobile terminal (21) and other mobile terminals (22) to create a group that includes the first mobile terminal (21) and the other mobile terminals (22) in a location area of the first mobile terminal (21), wherein:
the first mobile terminal (21) is configured to send a group generation request that carries a location area to the server (23); and
the server (23) is configured to: store mobile terminal location information corresponding to mobile terminal identifiers, receive the group generation request that carries the location area from the first mobile terminal, determine, according to the stored mobile terminal location information, other mobile terminal identifiers in the location area carried in the group generation request besides a first mobile terminal identifier, and set the determined other mobile terminal identifiers and the first mobile terminal identifier into a group corresponding to a group identifier, wherein the location area is one of a circular and a rectangular area centered on a location point and extended to a specific distance, the location point is a location point of the first mobile terminal (21), and the location point of the first mobile terminal (21) is determined by using a Global Positioning System, GPS, module in the first mobile terminal (21),
wherein:
mobile terminals (21, 22) in the group are further configured to send a group message that carries the group identifier and group information; and
the server (23) is further configured to receive the group message that carries the group identifier and the group information from the mobile terminal (21, 22) in the group, determine a group corresponding to the group identifier, and send the group information carried in the group message to the mobile terminals (21, 22) in the group corresponding to the group identifier except the mobile terminal (21, 22) that sends the group message.

6. The system according to claim 5, wherein:
the server (23) is further configured to send the group identifier to mobile terminals (21, 22) in the group.

7. The system according to claim 5, wherein:
the first mobile terminal (21) is further configured to send a group deletion message that carries the group identifier to the server (23); and
the server (23) is further configured to receive the group deletion message that carries the group identifier from the first mobile terminal (21), and delete the group corresponding to the group identifier.

8. A location-based group generation apparatus to create a group that includes a first mobile terminal (21) and other mobile terminals (22) in a location area of the first mobile terminal (21), comprising a setting module (31), a storage module (32), and a transceiver module (33), wherein:
the storage module (32) is configured to store mobile terminal location information corresponding to mobile terminal identifiers;
the transceiver module (33) is configured to receive a group generation request that carries the location area from the first mobile terminal (21) and send the request to the setting module (31), wherein the location area is one of a circular and a rectangular area centered on a location point and extended to a specific distance, the location point is a location point of the first mobile terminal (21), and the location point of the first mobile terminal (21) is determined by using a Global Positioning System, GPS, module in the first mobile terminal (21); and
the setting module (31) is configured to: determine, according to the mobile terminal location information stored in the storage module (32), the other mobile terminal identifiers in the location area carried in the group generation request besides a first mobile terminal identifier, and set the determined other mobile terminal identifiers and the first mobile terminal identifier into the group corresponding to a group identifier,
the transceiver module (33) is further configured to receive a group message that carries the group identifier and the group information from a mobile terminal (21, 22) in the group, determine a group corresponding to the group identifier in the setting module (31), and send the group information carried in the group message to mobile terminals (21, 22) in the determined group corresponding to the group identifier except the mobile terminal (21, 22) that sends the group message.

9. The apparatus according to claim 8, wherein:
the transceiver module (33) is further configured to send the group identifier to mobile terminals (21, 22) in the group.

10. The apparatus according to claim 8, further comprising:
a deleting module, configured to delete the group corresponding to the group identifier after the receiving module receives a group deletion message that carries the group identifier from the first mobile terminal (21).

## Patentansprüche

1. Standortbasiertes Gruppenerzeugungsverfahren zum Erstellen einer Gruppe, die ein erstes mobiles Endgerät (21) und weitere mobile Endgeräte (22) in einem Standortbereich des ersten Endgeräts (21) beinhaltet, Folgendes umfassend:
Speichern von Informationen zum Standort mobiler Endgeräte entsprechend Kennungen mobiler Endgeräte,
Empfangen (101) einer Gruppenerzeugungsanfrage, die den Standortbereich mitführt, von dem ersten mobilen Endgerät (21), wobei der Standortbereich ein runder oder ein rechteckiger Bereich ist, der an einem Standortpunkt vermittelt und auf eine spezielle Entfernung erweitert ist, wobei der Standortpunkt ein Standortpunkt des ersten mobilen Endgeräts (21) ist und der Standortpunkt des ersten mobilen Endgeräts (21) mit Hilfe eines GPS-, Global-Positioning-System-, Moduls in dem ersten mobilen Endgerät (21) bestimmt wird,
Bestimmen (102) der Kennungen weiterer mobiler Endgeräte in dem Standortbereich, die neben einer Kennung des ersten mobilen Endgeräts in der Gruppenerzeugungsanfrage mitgeführt werden, gemäß den gespeicherten Informationen zum Standort mobiler Endgeräte, und
Einstellen (103) der bestimmten Kennungen weiterer mobiler Endgeräte und der Kennung des ersten mobilen Endgeräts in die Gruppe entsprechend einer Gruppenkennung,
Empfangen einer Gruppennachricht, welche die Gruppenkennung und Gruppeninformationen mitführt, von einem mobilen Endgerät (21, 22) in der Gruppe,
Bestimmen einer Gruppe, die der Gruppenkennung entspricht, und
Senden der Gruppeninformationen, die in der Gruppennachricht mitgeführt werden, an mobile Endgeräte (21, 22) in der Gruppe entsprechend der Gruppenkennung, mit Ausnahme des mobilen Endgeräts (21, 22), das die Gruppennachricht sendet.

2. Verfahren nach Anspruch 1, wobei:
die Informationen zum Standort mobiler Endgeräte nach einer Selbsterkennung durch mobile Endgeräte (21, 22) gemeldet werden.

3. Verfahren nach Anspruch 1, ferner Folgendes umfassend:
Empfangen einer Gruppenlöschungsnachricht, welche die Gruppenkennung mitführt, von dem ersten mobilen Endgerät (21) und Löschen der Gruppe, die der Gruppenkennung entspricht.

4. Verfahren nach Anspruch 1, ferner Folgendes umfassend:
Senden der Gruppenkennung an mobile Endgeräte (21, 22) in der Gruppe.

5. Standortbasiertes Gruppenerzeugungssystem, mobile Endgeräte (21, 22) und einen Server (23) umfassend, wobei die mobilen Endgeräte (21, 22) ein erstes mobiles Endgerät (21) und weitere mobile Endgeräte (22) umfassen, um eine Gruppe zu erstellen, die das erste mobile Endgerät (21) und die weiteren mobilen Endgeräte (22) in einem Standortbereich des ersten mobilen Endgeräts (21) beinhaltet, wobei:
das erste mobile Endgerät (21) dafür konfiguriert ist, eine Gruppenerzeugungsanfrage, die einen Standortbereich mitführt, an den Server (23) zu senden und
der Server (23) für Folgendes konfiguriert ist: Speichern von Informationen zum Standort mobiler Endgeräte entsprechend der Kennung mobiler Endgeräte, Empfangen der Gruppenerzeugungsanfrage, die den Standortbereich mitführt, von dem ersten mobilen Endgerät, Bestimmen der Kennungen weiterer mobiler Endgeräte in dem Standortbereich, die neben einer Kennung des ersten mobilen Endgeräts in der Gruppenerzeugungsanfrage mitgeführt werden, gemäß den gespeicherten Informationen zum Standort mobiler Endgeräte, und Einstellen der bestimmten Kennungen weiterer mobiler Endgeräte und der Kennung des ersten mobilen Endgeräts in eine Gruppe entsprechend einer Gruppenkennung, wobei der Standortbereich ein runder oder ein rechteckiger Bereich ist, der an einem Standortpunkt vermittelt und auf eine spezielle Entfernung erweitert ist, wobei der Standortpunkt ein Standortpunkt des ersten mobilen Endgeräts (21) ist und der Standortpunkt des ersten mobilen Endgeräts (21) mit Hilfe eines GPS-, Global-Positioning-System-, Moduls in dem ersten mobilen Endgerät (21) bestimmt wird,
wobei:
mobile Endgeräte (21, 22) in der Gruppe ferner dafür konfiguriert sind, eine Gruppennachricht zu senden, welche die Gruppenkennung und Gruppeninformationen mitführt,
der Server (23) ferner dafür konfiguriert ist, die Gruppennachricht, welche die Gruppenkennung und die Gruppeninformationen mitführt, von dem mobilen Endgerät (21, 22) in der Gruppe zu empfangen, eine Gruppe entsprechend der Gruppenkennung zu bestimmen und die Gruppeninformationen, die in der Gruppennachricht mitgeführt werden, an die mobilen Endgeräte (21, 22) in der Gruppe entsprechend der Gruppenkennung zu senden, mit Ausnahme des mobilen Endgeräts (21, 22), das die Gruppennachricht sendet.

6. System nach Anspruch 5, wobei:
der Server (23) ferner dafür konfiguriert ist, die Gruppenkennung an mobile Endgeräte (21, 22) in der Gruppe zu senden.

7. System nach Anspruch 5, wobei:
das erste mobile Endgerät (21) ferner dafür konfiguriert ist, eine Gruppenlöschungsnachricht an den Server (23) zu senden, welche die Gruppenkennung mitführt, und
der Server (23) ferner dafür konfiguriert ist, die Gruppenlöschungsnachricht, welche die Gruppenkennung mitführt, von dem ersten mobilen Endgerät (21) zu empfangen und die Gruppe zu löschen, die der Gruppenkennung entspricht.

8. Standortbasierte Gruppenerzeugungsvorrichtung zum Erstellen einer Gruppe, die ein erstes mobiles Endgerät (21) und weitere mobile Endgeräte (22) in einem Standortbereich des ersten Endgeräts (21) beinhaltet, ein Einstellungsmodul (31), ein Speichermodul (32) und ein Sendeempfängermodul (33) umfassend, wobei:
das Speichermodul (32) dafür konfiguriert ist, Informationen zum Standort mobiler Endgeräte entsprechend Kennungen der mobilen Endgeräte zu speichern,
das Sendeempfängermodul (33) dafür konfiguriert ist, eine Gruppenerzeugungsanfrage, die den Standortbereich mitführt, von dem ersten mobilen Endgerät (21) zu empfangen und die Anfrage an das Einstellungsmodul (31) zu senden, wobei der Standortbereich ein runder oder ein rechteckiger Bereich ist, der an einem Standortpunkt vermittelt und auf eine spezielle Entfernung erweitert ist, wobei der Standortpunkt ein Standortpunkt des ersten mobilen Endgeräts (21) ist und der Standortpunkt des ersten mobilen Endgeräts (21) mit Hilfe eines GPS-, Global-Positioning-System-, Moduls in dem ersten mobilen Endgerät (21) bestimmt wird, und
das Einstellungsmodul (31) für Folgendes konfiguriert ist: Bestimmen der Kennungen weiterer mobiler Endgeräte in dem Standortbereich, die neben einer Kennung des ersten mobilen Endgeräts in der Gruppenerzeugungsanfrage mitgeführt werden, gemäß den in dem Speichermodul (32) gespeicherten Informationen zum Standort mobiler Endgeräte, und Einstellen der bestimmten Kennungen weiterer mobiler Endgeräte und der Kennung des ersten mobilen Endgeräts in die Gruppe, entsprechend einer Gruppenkennung,
wobei das Sendeempfängermodul (33) ferner dafür konfiguriert ist, eine Gruppennachricht, welche die Gruppenkennung und Gruppeninformationen mitführt, von einem mobilen Endgerät (21, 22) in der Gruppe zu empfangen, in dem Einstellungsmodul (31) eine Gruppe zu bestimmen, die der Gruppenkennung entspricht, und die Gruppeninformationen, die in der Gruppennachricht mitgeführt werden, entsprechend der Gruppenkennung an mobile Endgeräte (21, 22) in der Gruppe zu senden, mit Ausnahme des mobilen Endgeräts (21, 22), das die Gruppennachricht sendet.

9. Vorrichtung nach Anspruch 8, wobei:
das Sendeempfängermodul (33) ferner dafür konfiguriert ist, die Gruppenkennung an mobile Endgeräte (21, 22) in der Gruppe zu senden.

10. Vorrichtung nach Anspruch 8, ferner Folgendes umfassend:
ein Löschungsmodul, das dafür konfiguriert ist, die Gruppe zu löschen, die der Gruppenkennung entspricht, nachdem das Empfangsmodul von dem ersten mobilen Endgerät (21) eine Gruppenlöschungsnachricht empfangen hat, welche die Gruppenkennung mitführt.

## Revendications

1. Procédé de génération de groupes basée sur la localisation, pour créer un groupe qui comprend un premier terminal mobile (21) et d'autres terminaux mobiles (22) dans une zone de localisation du premier terminal mobile (21), comprenant :
le stockage d'informations de localisation de terminaux mobiles correspondant à des identifiants de terminaux mobiles ;
la réception (101) d'une demande de génération de groupe qui comporte la zone de localisation du premier terminal mobile (21), dans lequel la zone de localisation est l'une parmi une zone rectangulaire et circulaire centrée sur un point de localisation et s'étendant sur une distance spécifique, le point de localisation est un point de localisation du premier terminal mobile (21), et le point de localisation du premier terminal mobile (21) est déterminé en utilisant un module de Système de Positionnement Global, GPS, dans le premier terminal mobile (21) ;
la détermination (102), en fonction des informations de localisation de terminaux mobiles stockées, des autres identifiants de terminaux mobiles dans la zone de localisation que comporte la demande de génération de groupe mis à part un identifiant de premier terminal mobile ; et
la définition (103) des autres identifiants de terminaux mobiles déterminés et de l'identifiant du premier terminal mobile en tant que groupe correspondant à un identifiant de groupe,
la réception d'un message de groupe qui comporte l'identifiant de groupe et de l'information de groupe de la part d'un terminal mobile (21, 22) dans le groupe ;
la détermination d'un groupe correspondant à l'identifiant de groupe ; et
l'envoi de l'information de groupe que comporte le message de groupe à des terminaux mobiles (21, 22) dans le groupe correspondant à l'identifiant de groupe à l'exception du terminal mobile (21, 22) qui envoie le message de groupe.

2. Procédé selon la revendication 1, dans lequel :
les informations de localisation de terminaux mobiles sont signalées par des terminaux mobiles (21, 22) après une auto-détection.

3. Procédé selon la revendication 1, comprenant en outre :
la réception d'un message de suppression de groupe qui comporte l'identifiant de groupe de la part du premier terminal mobile (21), et la suppression du groupe correspondant à l'identifiant de groupe.

4. Procédé selon la revendication 1, comprenant en outre :
l'envoi de l'identifiant de groupe à des terminaux mobiles (21, 22) dans le groupe.

5. Système de génération de groupes basée sur la localisation, comprenant des terminaux mobiles (21, 22) et un serveur (23), dans lequel les terminaux mobiles (21, 22) comprennent un premier terminal mobile (21) et d'autres terminaux mobiles (22) pour créer un groupe qui comprend le premier terminal mobile (21) et les autres terminaux mobiles (22) dans une zone de localisation du premier terminal mobile, (21), dans lequel :
le premier terminal mobile (21) est configuré pour envoyer une demande de génération de groupe, qui comporte une zone de localisation, au serveur (23) ; et
le serveur (23) est configuré pour : stocker les informations de localisation de terminaux mobiles correspondant à des identifiants de terminaux mobiles, recevoir la demande de génération de groupe qui comporte la zone de localisation de la part du premier terminal mobile, déterminer, en fonction des informations de localisation de terminaux mobiles stockées, d'autres identifiants de terminaux mobiles dans la zone de localisation que comporte la demande de génération de groupe mis à part un identifiant de premier terminal mobile, et définir les identifiants des autres terminaux mobiles et l'identifiant du premier terminal mobile en tant que groupe correspondant à un identifiant de groupe, dans lequel la zone de localisation est l'une parmi une zone circulaire et rectangulaire centrée sur un point de localisation et s'étendant sur un distance spécifique, le point de localisation est un point de localisation du premier terminal mobile (21), et le point de localisation du premier terminal mobile (21) est déterminé en utilisant un module de Système de Positionnement Global, GPS, dans le premier terminal mobile (21),
dans lequel :
des terminaux mobiles (21, 22) dans le groupe sont en outre configurés pour envoyer un message de groupe qui comporte l'identifiant de groupe et de l'information de groupe ; et
le serveur (23) est en outre configuré pour recevoir le message de groupe qui comporte l'identifiant de groupe et l'information de groupe de la part du terminal mobile (21, 22) dans le groupe, déterminer un groupe correspondant à l'identifiant de groupe, et envoyer l'information de groupe que comporte le message de groupe aux terminaux mobiles (21, 22) dans le groupe correspondant à l'identifiant de groupe à l'exception du terminal mobile (21, 22) qui envoie le message de groupe.

6. Système selon la revendication 5, dans lequel :
le serveur (23) est en outre configuré pour envoyer l'identifiant de groupe aux terminaux mobiles (21, 22) dans le groupe.

7. Système selon la revendication 5, dans lequel :
le premier terminal mobile (21) est en outre configuré pour envoyer un message de suppression de groupe, qui comporte l'identifiant de groupe, au serveur (23) ; et
le serveur (23) est en outre configuré pour recevoir le message de suppression de groupe qui comporte l'identifiant de groupe de la part du premier terminal mobile (21), et supprimer le groupe correspondant à l'identifiant de groupe.

8. Appareil de génération de groupes basée sur la localisation pour créer un groupe qui comprend un premier terminal mobile (21) et d'autres terminaux mobiles (22) dans une zone de localisation du premier terminal mobile (21), comprenant un module de réglage (31), un module de stockage (32), et un module émetteur-récepteur (33), dans lequel :
le module de stockage (32) est configuré pour stocker des informations de localisation de terminaux mobiles correspondant à des identifiants de terminaux mobiles ;
le module émetteur-récepteur (33) est configuré pour recevoir une demande de génération de groupe qui comporte la zone de localisation de la part du premier terminal mobile (21) et envoyer la demande au module de réglage (31), dans lequel la zone de localisation est l'une parmi une zone circulaire et rectangulaire centrée sur un point de localisation et s'étendant sur une distance spécifique, le point de localisation est un point de localisation du premier terminal mobile (21), et le point de localisation du premier terminal mobile (21) est déterminé en utilisant un module de Système de Positionnement Global, GPS, dans le premier terminal mobile (21) ; et
le module de réglage (31) est configuré pour : déterminer, en fonction des informations de localisation de terminaux mobiles stockées dans le module de stockage (32), les autre identifiants de terminaux mobiles dans la zone de localisation que comporte la demande de génération de groupe mis à part un identifiant de premier terminal mobile, et définir les autres identifiants de terminaux mobiles déterminés et l'identifiant de premier terminal mobile en tant que groupe correspondant à un identifiant de groupe,
le module émetteur-récepteur (33) est en outre configuré pour recevoir un message de groupe qui comporte l'identifiant de groupe et l'information de groupe de la part d'un terminal mobile (21, 22) dans le groupe, déterminer un groupe correspondant à l'identifiant de groupe dans le module de réglage (31), et envoyer l'information de groupe que comporte le message de groupe aux terminaux mobiles (21, 22) dans le groupe déterminé correspondant à l'identifiant de groupe à l'exception du terminal mobile (21, 22) qui envoie le message de groupe.

9. Appareil selon la revendication 8, dans lequel :
le module émetteur-récepteur (33) est en outre configuré pour envoyer l'identifiant de groupe à des terminaux mobiles (21, 22) dans le groupe.

10. Appareil selon la revendication 8, comprenant en outre :
un module de suppression configuré pour supprimer le groupe correspondant à l'identifiant de groupe après la réception par le module de réception d'un message de suppression de groupe qui comporte l'identifiant de groupe de la part du premier terminal mobile (21).
